# EUROPEAN PATENT APPLICATION

(11) **EP 1 308 912 A2**
(43) Date of publication of application: **07.05.2003**
(21) Application number: 01310560.6
(22) Date of filing: 18.12.2001
(51) Int. Cl.: G07F 19/00, G07F 7/02

(54) **Method and apparatus for crediting debit service accounts**

(30) Priority: 05.11.2001 GB 0126592
(71) Applicant: Domain Direct Limited, Kent, Orpington BR5 4BQ (GB)
(72) Inventor: Murray, Tom, c/o Top-Up Technologies Limited, London N5 2EA (GB)
(74) Representative: Midgley, Jonathan Lee

(57) **Abstract**

A payment apparatus (1) for crediting an account associated with identification data as a result of a remote transaction, the apparatus comprising a payment receiving device (3); an identification data receiving device (2) for receiving identification data, an output terminal (9) for transmitting transaction data comprising data representing the identification data, the value of the payment received at the payment receiving device (3) to a remote processing device (20) and a receiving terminal (9) for receiving response data from the remote processing device (20), said response data being indicative of the result of the remote transaction. A method of operation of such a payment apparatus (1) and a system comprising such a payment apparatus (1), and a method of operation of the system are also disclosed.

## Description

The present invention relates to a method and apparatus for crediting a user account. More particularly, the invention relates to a method and apparatus for crediting prepaid mobile telephone accounts and prepaid debit services.

Prepaid mobile telephones, for which credit for usage must be purchased before the usage occurs, have been introduced so that a telephone service provider need not perform credit checks, or have the possibility of non-payment of an invoice for services already provided.

Prepaid debit services allow a user to pay for various goods and services using a card, for example, on line, when the use of cash is not possible. The debit card provider does not need to check a credit rating or other details of a user, as the money is received in advance of use of the card.

In such prepaid mobile telephone systems, each user has an account. The account can be credited by purchasing a time allocation which is then reduced incrementally during use of the telephone for calls or text messages or other services.

In order to credit a user account, it is necessary for the telecommunications service provider to receive payment in advance of providing the service purchased.

In the prior art, the most common method of receiving payment is to purchase a prepaid card. Such cards carry a unique identity number which is concealed at the point of sale and revealed after purchase by the user. The user accesses the service provider network, through a designated channel, and enters the unique identity number.

Each unique identity number is associated with a particular monetary value, which is shown on the card; the information is also retained on the service provider database.

Once the unique identity number is received, and a user account updated, the unique identity number is marked as used on the service provider database. If the unique identity number is marked as used on the database before the user account is updated then the unique identity number has already been used and no further update of the user account can be made with it. Therefore, such cards may only be used once, before being discarded.

Such cards carrying unique identity numbers have the problem in that the value of the card is inherent in the card. Therefore, theft of such cards, and fraudulent purchase of such cards is a common occurrence.

Therefore, cards which have no intrinsic value are now also used. These cards contain identification data. However, instead of the identification data being an indication of monetary value, it is an indication of a particular user. The cards do not carry any account details for a user, but only identification. Therefore, by theft of such a card, no value is lost as the card is not used during normal calls.

A disadvantage of such prior art cards with no intrinsic value is that they do not directly credit a user account; once the user account is identified, value must still be added separately. This is generally done by payment to a cashier, for example a newsagent, who swipes the identity card and enters a code (e.g. PIN) designated for that newsagent as a security check. The cashier then receives money from the user and confirms the transaction.

Such a system is open to abuse if the newsagent code is discovered or if the cashier is not trustworthy. It is also only possible to credit cards using such a system when the shop is open, and the system suffers because of the expense of a cashier in the shop, and the shop requiring payment for providing the service.

It is therefore an object of the present invention to remove or ameliorate at least one of the disadvantages of the prior art.

According to a first aspect of the invention there is provided a payment apparatus for crediting an account associated with identification data as a result of a remote transaction, the apparatus comprising a payment receiving device, an identification data receiving device for receiving identification data, an output terminal for transmitting transaction data to a remote processing device, the transaction data comprising at least data representing the identification data and the value of a payment received by the payment receiving device, and a receiving terminal for receiving response data from the remote processing device, said response data being indicative of the result of the remote transaction.

Preferably, the identification data read by the identification data receiving device includes service provider identification data. This allows identification of the provider that holds the account.

Preferably, the payment apparatus further comprises a printing device for printing information associated with the remote transaction based on the response data. This gives an advantage that the user has a paper record of the transaction and a note of its success.

Preferably, the payment apparatus further comprises an input device for inputting instructions to the payment apparatus. This allows communication between user and payment apparatus and allows the user to choose various options given by the payment apparatus.

Preferably, the input device is a touch screen. This simplifies the user interface and increases the usability of the apparatus.

Preferably, a display device is also provided, and preferably this is the touch screen.

Preferably, the payment receiving device is a bank note scanner. The payment apparatus can therefore accept bank notes as payment for crediting the user's account with the service provider.

Preferably, the payment apparatus further comprises a verification device for verifying the validity of a payment confirmed by the payment receiving device. This allows verification to be confirmed at the payment apparatus before the transaction data is transmitted, so reducing the likelihood that the transaction proceeds without valid payment having been made.

Preferably, the verification device comprises a bank note authenticator. This allows bank notes to be verified as genuine before the transaction takes place.

The payment receiving device may also comprise a bank card reader.

Preferably, the verification device receives data representing bank card information from the payment receiving device, and the payment apparatus transmits data representing the card number and expiry date to a remote device and receives data from the remote device, the data from the remote device being representative of authorisation or refusal of payment. In this case, for security, the payment apparatus may be arranged to receive a PIN at the input device and transmit it to the remote device.

Preferably, the identification receiving device comprises a card reader for receiving and reading an ID card containing the identification data. The card is a convenient means of storing and transporting the identification data, without the user having to remember it.

Preferably, the ID card reader includes a magnetic strip reader for reading identification data from the ID card. Magnetic strip cards are well known and are economical to produce and standardised. The ID card reader may also include an IC reader for reading the identification data from an integrated circuit (IC) on the chip card, which allows more data to be stored.

The payment apparatus may further comprise input means to allow some or all of the identification data to be inputted manually into the payment apparatus. This is particularly suitable where the identification data is a mobile telephone number of the user. The payment apparatus may be arranged to receive identification data entered via the touch screen.

The payment apparatus may also comprise means for vending articles bearing new identification data.

Preferably, the vending device vends articles in response to an authenticated payment being received by the payment receiving device.

Preferably, the transaction data also includes data representing a payment apparatus ID. This ID allows the remote device to communicate with the payment apparatus.

According to a second aspect of the invention there is provided a payment system for crediting an account associated with identification data as a result of a remote transaction, the system comprising a payment apparatus as described above, a remote processing device communicably connected to the payment apparatus, at least one service provider device connected to the remote processing device, wherein the output terminal transmits transaction data to the remote processing device, the transaction data comprising at least data representing the identification data and the value of the payment received at the payment receiving device, and the remote processing device transmits the data to a service provider device determined based upon the identification data.

Preferably, the service provider device stores credit data corresponding to one or more accounts and said service provider device modifies the credit data corresponding to the account identified by the identification data in said received transaction data.

Preferably, the remote processing device sends said response data including a confirmation signal to the payment apparatus after receiving an indication from the service provider of authorisation of the transaction.

According to a third aspect of the invention, there is provided a payment method for crediting an account associated with identification data as a result of a remote transaction, the method comprising receiving identification data at a payment apparatus, obtaining confirmation of receipt of payment at a payment receiving device associated with the payment apparatus, sending a transaction request from the payment apparatus to a remote processing device, the information comprising the identification data, the value of the payment received to the associated service provider, and receiving data from the remote processing device to the payment apparatus, said data being indicative of the result of the transaction.

The payment system may further authenticate the payment with a payment verification device.

At least part of the payment may be made by the payment receiving device receiving bank notes.

At least part of the payment may also be made by the payment receiving device receiving a bank card.

At least part of the payment may also be made by the payment receiving device receiving an IC chip card.

The user may be prompted to choose a method of payment.

Preferably, the user is prompted to choose the amount of payment.

Preferably, a confirmation of the transaction is provided to the user. More preferably, the confirmation is in the form of a print out from the printing device.

Preferably, for increased security, the transmitted data further comprises a PIN.

The identification data may be associated with a particular mobile telephone number. Where the account is associated with a mobile telephone, it is preferable for the identification data to indicate this. Where the identification data is the telephone number itself, and no carrier is used for it, then such association simplifies the system for the user.

According to a fourth aspect of the present invention, there is provided a payment method for crediting an account associated with identification data as a result of a remote transaction, the method comprising receiving a payment and receiving identification data at a payment apparatus, transmitting transaction data identifier to a remote processing device, the transaction data comprising at least data representing the value of the payment and the identification data, transmitting data from the remote processing device to a service provider associated with the identification data, and the payment apparatus receiving response data from the remote processing device, the response data being indicative of the approval of the transaction after indication, from the service provider to the remote processing device, of authorisation of the request.

Preferably, the payment is returned if the transaction is not successful.

Preferably, the step of determining the service provider associated with the account to be credited by the payment apparatus is included in the method.

The embodiments of the invention will now be described, purely by way of example, with reference to the accompanying drawings, in which:
Figure 1 is a schematic diagram of a payment apparatus according to a first embodiment of the present invention;

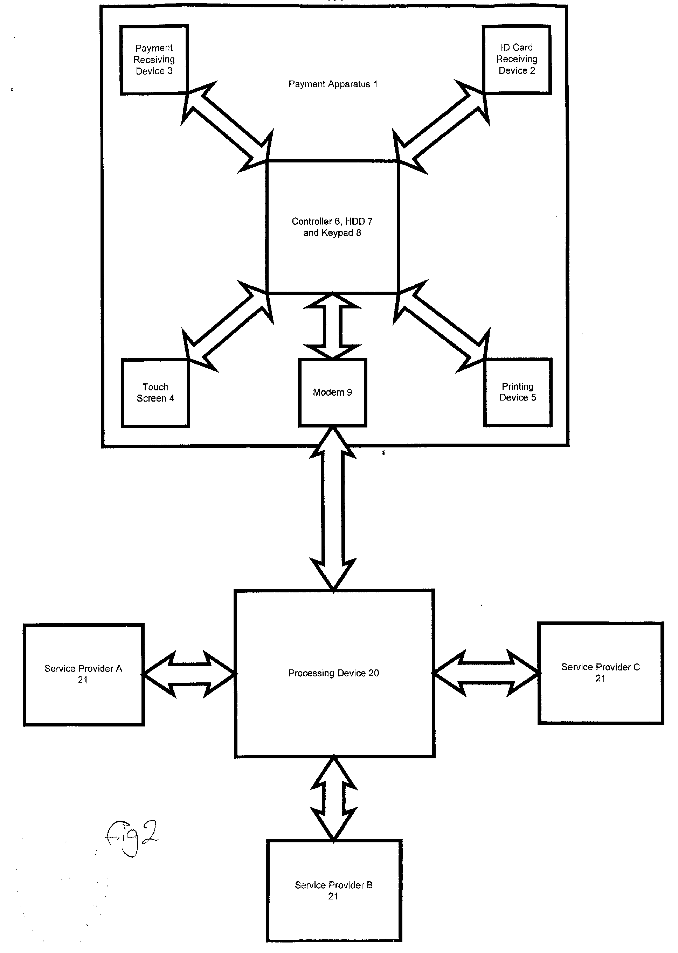

Figure 2 is a schematic diagram of a system according to a further embodiment of the present invention;
Figure 3 is a flow diagram showing the steps in the operation of the apparatus of Figure 1;
Figure 4 is a flow diagram showing a variation of the steps in the operation of the apparatus of Figure 1; and
Figure 5 is a flow diagram showing the steps in the operation of the system shown in Figure 2.

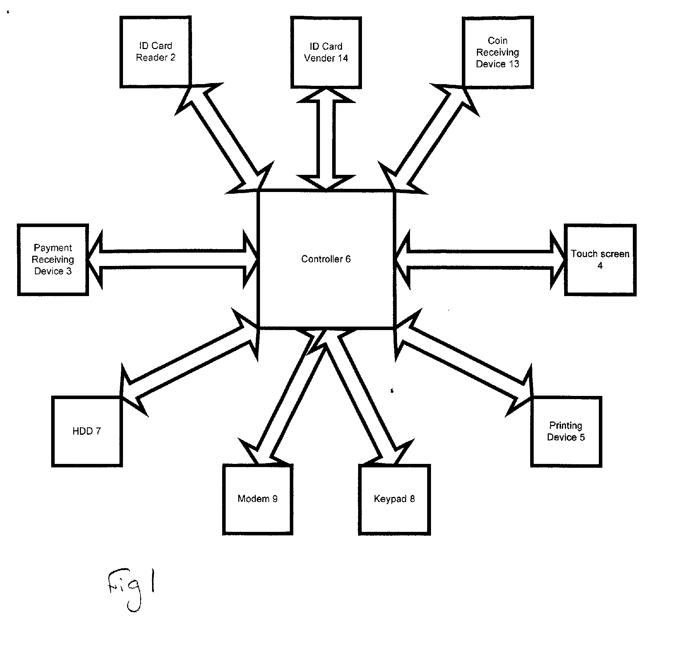

Figure 1 shows a payment apparatus 1 comprising an ID card reader 2 as a means for receiving identification data, a bank note reader 3 as a payment receiving device and payment verifying device, and touch screen 4 as a display and printing device 5.

Inside the payment apparatus 1 is a central processor unit (CPU) mounted on a controller 6, a Hard Disk Drive (HDD) 7 as a storage device, a numeric keypad 8 for communicating with the controller 6. An output terminal and a receiving terminal are provided by a modem 9, for communicating with remote devices. Alternatively, the output terminal and receiving terminal may be separate units connected to different communication lines. The modem 9 may connect through a ISDN or ASDL line, a normal telephone line or radio, or cellular line etc. Alternatively, the transmission and output terminals may be a network card connected to a local or wide area network.

The ID card reader 2, bank note reader 3, touch screen 4 and printing device 5 are all connected to and controlled by the controller 6. The controller 6 is IBM compatible and runs Windows 2000 software, although other hardware and software may be used. The communication between the controller 6 and the ID card reader 2, bank note reader 3, touch screen 4 and printing device 5 is made with Application Program Interface (API) using Mark-up Language (XML) and javascript, as is known in the art.

The ID card reader 2 and bank card reader 3, may be the same device.

The controller 6 may also be connected to a network card 12 to allow communication with a local area network.

Preferably, a coin receiver 13 is also provided in the payment apparatus 1, connected to a prepaid card vending slot 14.

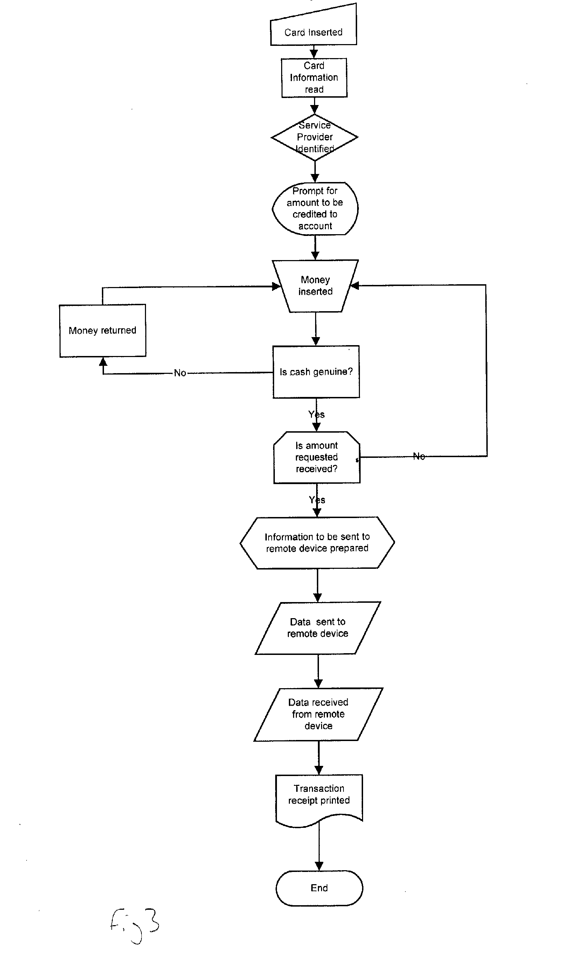

The method of operation of the payment apparatus 1 will now be described. Figure 3 shows the method of operation of the payment apparatus 1. Each user of the apparatus is provided with an ID card 11. The ID cards 11 may be given out free, for example, in magazines or in shops. Each ID card 11 carries identification data which can be read by the ID card reader 2. In the present embodiment the identification data is a number, which is stored on a magnetic strip on the ID card 11. Alternatively, the identification data could be stored on an IC card.

Alternatively, there need not be an ID card 11 at all. The identification data could be a personal identity number, entered on the touch screen 4 or on an alphanumeric or numeric pad. If the account is a telephone account, the identification data could be the telephone number for the account that is to be credited. The key feature is that the identification data uniquely defines a user's service provider 21 account.

A portion of the identification data identifies the service provider 21 that holds the account associated with the identification data. Another portion of the identification data identifies the individual account associated with the identification data.

The user inserts the ID card 11 into the ID card reader 2. The ID card reader 2 reads the identification data from the card, and transmits this to the controller 6. The controller 6 processes it, and compares the portion of the identification data that identifies the relevant service provider 21 with details of known service providers 21, stored in a database stored on the HDD 7. The database contains details of a number of service providers 21, which ID card 11 users have accounts with.

After the service provider 21 associated with a particular identification data is identified, the controller 6 provides instructions for the touch screen 4 to show a logo of that service provider 21. The user then sees that the payment apparatus 1 is configured for use with that service provider 21. It is also possible to display advertisements tailored to a particular service provider 21 at this stage. If the ID card 11 does not contain a valid portion of the identification data corresponding to any of the service providers 21 contained in the database, then the ID card 11 is returned with an error message being displayed on the touch screen 4. This may be because the service provider 21 is not recognised from the HDD 7 database, or because the payment apparatus 1 is not configured to accept ID cards for the recognised service provider 21.

The identification data may comprise a PIN as well as data stored on the ID card 11. This provides security as the PIN may be kept secret and is not susceptible to theft in the same way as a card, unless written down. Preferably, such a PIN is entered via the touch screen 4 associated with the payment apparatus. In this case, part of the identification data, that part representing the service provider 21 and the account identifier only is stored on the card. This provides added security, as the card and the PIN must be known in order to credit the account.

The bank note reader 3 allows single note escrow. This type of reader allows the return of a bank note after it has been received and validated. Such bank note readers 3 can return a bank note after receipt and validation if the transaction fails for some reason.

Once the relevant service provider 21 has been identified, the user is prompted to choose an amount to credit the associated account by for example, to allow use of the mobile telephone. The amount must be valid for a single bank note where single note escrow is provided by the bank note reader 3.

The bank note reader 3 is activated and the user is prompted to insert the relevant value bank note into it as payment. Alternatively, the user may be prompted to insert a note without choosing an amount. The value of the note is then determined by the bank note reader 3, as it reads and authenticates the note when it is inserted. If the note is found genuine the controller 6 prepares to contact a processing device 20, remote to the payment apparatus 1.

The controller 6 establishes a connection with the processing device 20 via the modem 9. The connection may be using ISDN, ADSL, or a standard telephone line, as are known in the art. The connection may be direct with the processing device 20, or may be to an Internet Service Provider (ISP), the connection then being completed by over the internet. The connection is secured using one or more of the techniques known in the art.

The controller 6 transmits a transaction request to the processing device 20 in the form of data identifying the particular payment apparatus 1 being used, the identification data, data indicating the associated service provider 21, and data representing the value to be credited to the account. Other information may also be transmitted. Alternatively, data representing the particular payment apparatus 1 being used need not be sent, for example, when each payment apparatus 1 is connected to the processing device 20 by a channel dedicated to only that payment apparatus 1.

The controller 6 then awaits a response from the processing device 20. If the transaction is successful, the processing device 20 returns a notification stating that the transaction was successful, and the controller 6 displays a message on the touch screen 4 indicating this to the user. The printing device 5 may also be instructed to print out a confirmation receipt, and this may be after the user is given the option of receiving a printed receipt or not.

If no response is received by the payment apparatus 1 from the remote processing device, within a time out period, then the payment apparatus 1 aborts the transaction and returns the bank note to the user. The transaction may fail if there is a communications error between the payment apparatus and the service provider at any point. In this case, the data may be re-transmitted. The payment apparatus may also automatically declare itself out of order and not accept any further input.

The printing device 5 may print the time and date of the failed transaction, and/or details of the payment apparatus 1 used and the reason for the failure.

The transaction may not be completed if, for example, the account has a credit limit and the transaction would result in the account being more in credit than this limit. In this case, an indication of this may be transmitted from the service provider 21, to the payment apparatus 1, via the processing device 20. The payment apparatus 1 may then display this information on the touch screen 4, or print it out with the printing device 5. Alternatively, no reason for the failure may be given by the payment apparatus 1.

The transaction may also fail if the ID card 11 is not valid for some reason, e.g. if the service provider 21 identified does not have an account number associated with the identification data.

If the service provider 21 is not determined by the payment apparatus 1, then the operation fails locally and the transaction request cannot be sent. The ID card 11 is simply returned to the user, and an error message is displayed on the touch screen 4.

If the service provider 21 identifier is correct, but the identification data is invalid for some other reason, then the operation fails at the service provider 21.

Alternatively, a bank note reader 3 which does not allow single note escrow may be employed. The multiple bank note reader 3 may be the same device as the single note escrow bank note reader 3, but with different operating software. In this case, the user may choose any multiple of the smallest available bank note (e.g. £5 in the United Kingdom) when using such a bank note reader 3, and several notes may be inserted into the bank note reader 3 in one transaction, before the processing device 20 is sent the transmission data by the payment apparatus 1.

In the case of a multiple bank note reader 3, if a note is found as genuine, the amount to be entered, shown on the touch screen 4, is reduced by the value of the bank note. If a note is not found genuine by the authenticator, the note is returned and the amount received is not updated. When the amount accepted in the bank note reader 3 is equal to the amount specified by the user to credit the account by, the controller 6 prepares to contact the processing device 20.

Alternatively, the user may enter bank notes until the value desired by the user to be credited to the associated account is reached. Once the desired value has been reached, the user indicates to the controller 6, via the touch screen 4 that no more value is to be added, and the process should proceed.

If the transaction cannot be completed and the bank note reader 3 has already accepted the payment, and the notes cannot be returned to the user, then the controller 6 instructs the printing device 5 to print out a receipt which states the amount that was entered into the bank note reader 3.

Once the processing device 20 has confirmed the transaction to the controller 6, and the user has been informed of this, the card is returned from the ID card reader 2. The ID card 11 may be returned at any stage after the identification data is read, as no data is written to the card. Alternatively, the ID card reader 2 may write a transaction log to the ID card 11 if the card has sufficient storage capacity.

The user may then also receive a separate confirmation in the form of a text message to a mobile telephone associated with the account, if there is one. However, this is generally effected by the service provider 21, rather than the payment apparatus 1. Alternatively, the payment apparatus may prompt for a telephone number or e-mail address to be entered, to which a confirmation that the transaction is successful, is sent.

The payment apparatus has a management function that allows data from the payment apparatus to be reviewed by a local or remote administrator. A transaction log of the events of each transaction is recorded on to the HDD 7. The controller 6 can be interrogated remotely by connecting to the payment apparatus 1 through the modem 9 to a remote device (not shown). The controller 6 is configured to send an e-mail containing the transaction log to a pre-arranged address. This e-mail may be sent in response to an instruction received by the controller 6, or may be scheduled to take place at a certain time, e.g. at the end of each day. All information regarding the number and value of notes, the number of transactions and details of the users can be downloaded to a remote unit via the connection. The controller 6 may be run from a remote device by using proprietary software, such as PCAnywhere™. The connection may be established either by the remote device, or by the payment apparatus 1. The payment apparatus 1 may give an indication to the remote device when the bank note reader 3 is nearly full and requires emptying.

The payment apparatus 1 may be located in the premises of a client responsible for the day to day running of the apparatus 1. The payment apparatus 1 may be attached to a Local Area Network (LAN) of the client. The LAN can then be used to connect the payment apparatus 1 to a modem and the internet. If the LAN is inherently secure, then no additional security is required for the connection.

Additionally, the payment apparatus 1 may be checked locally, e.g. using the keypad 9 within the payment apparatus 1 as an interface. The keypad 9 is connected to the controller 6 and is secured within the locked payment apparatus 1 to prevent unauthorised use. Alternatively, when the payment apparatus 1 is attached to a LAN, the local checking may be carried out over the LAN, without the need to open the payment apparatus 1. It is also possible to configure the payment apparatus so that the touch screen 4, or other input device external to the payment apparatus 1 is used to interrogate the controller 6. In this case there is a management function code in the form of a hardware card, or a PIN, which identifies an authorised user to interrogate the controller 6.

Such checking only allows certain information to be disclosed, such as the number of transactions and the amount held in the bank note reader, without disclosing details of the users, in line with data protection laws.

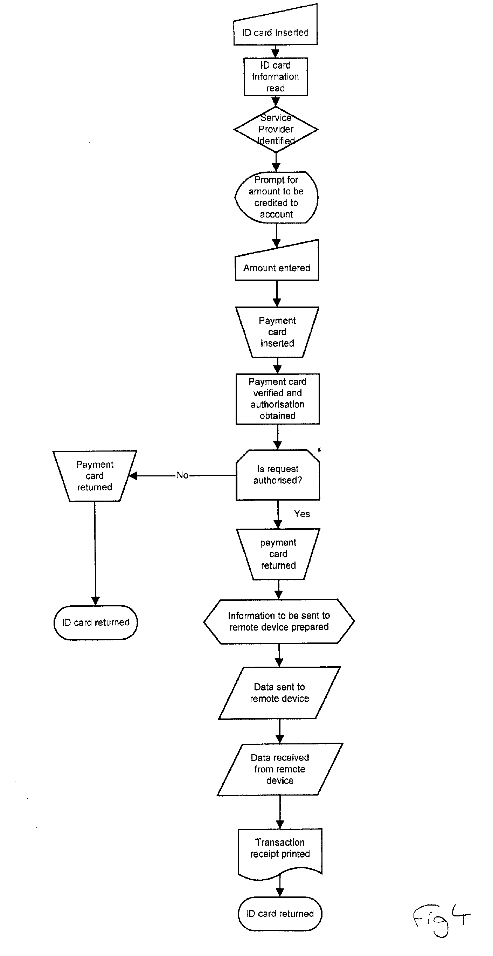

In an alternative embodiment, shown in Figure 4, a payment card reader may be used as well as or instead of the bank note reader 3. Therefore, instead of payment being made at the payment apparatus 1 in cash, a credit or debit card may be used. When the payment is made by credit or debit card, the verification and authorisation for payment are not carried out locally. Instead, these steps must occur by liasing with a card verification and authorisation company.

The process overall is similar to that described above. The difference lies in the payment receipt and verification and the return of funds if the transaction fails. Once the ID card 11 has been inserted, the user may be prompted to choose their preferred method of payment, i.e. bank notes or payment card. The user is prompted to enter their payment card. The user then inserts a payment card into a payment card reader. The payment card reader reads the card and obtains the data carried on the payment card, i.e. payment card number, and expiry date. The user may be prompted to enter a PIN associated with the payment card on the touch screen 4.

The controller then prepares a data packet comprising the above data, together with data representing the amount to be debited and an originator ID, which is then communicated to a remote device which verifies and authorises the payment transaction. The communication of this data is made through a merchant gateway of the client associated with that particular payment apparatus 1. Data representing the merchant ID of the client is sent to the remote device with the other information.

Once the payment has been confirmed, the steps to credit the user's account at the service provider 21 are followed as described above in the bank note reader 3 embodiment.

The following embodiment is concerned with ID cards that have an initial value associated with them, and which can also be credited with value, the value being held remotely. The payment apparatus 1 may also have an ID card vending section. The ID card vending section comprises a coin receiver and verifier 13, and an ID card vending device 14.

Alternatively, the coin receiver may be replaced by a bank note receiver, or the bank note reader 3 described above may be used to receive payment for the ID card to be issued. The ID cards 11 vended at the ID card vending device 14 have a value associated with the card as well as identification data.

Any suitable payment receiving device may be used for crediting an account, whether vending an ID card 11 or not, such as a bank card reader or a chip card reader, the chip card holding data representing monetary value, which is decremented as payment is made.

The value related to the card is stored at the service provider 21 as in the previous embodiments. However, the account in this case, is not associated with a telephone number. It is associated with the ID card 11 itself. The ID card 11 may be used to pay for services and goods on the internet. An example of such a card is a Splashplastic™ card. Such cards are commonly available either with value already credited to an account associated with each particular card, or freely distributed ready for the associated account to be credited.

The ID card 11 is loaded into the vending device 14. The ID cards 11 have no predetermined value associated with the account associated with each ID card 11. In this case, on purchase of an ID card 11, the payment apparatus 1 acts in the same way as previous embodiments to credit the associated account with an amount related to the monetary value received at the payment apparatus 1.

Alternatively, a fixed price for the ID cards may be used. In this case, when a batch of ID cards 11 are loaded into the vending device 14, the service provider 21 is notified of the price they will be sold at from the vending device 14, for example £1 each, (or where only a bank note reader is used £5). The service provider 21 allocates this value to the account associated with the ID card 11.

The user inserts payment of £1 into the coin receiver and verifier 13. If the coin(s) is (are) verified an ID card 11 is vended from the vending device 14. At this stage the ID card 11 is not activated. In order to activate the ID card 11, the service provider 21 is contacted. This is done via the internet to a service provider 21 internet site. The card has an associated secret identifier, which must be entered every time the card is used to debit the account, and may be required to credit the account, as verification that the card has not been stolen. It is possible that this identifier can be changed by the user, on first use, to a memorable word or number for security, which is not displayed on the card.

Alternatively, in the case of mobile telephone crediting, the identifier (PIN) given on the ID card 11 may be entered into the mobile telephone, the account of which is to be credited. In this case, the service provider 21 receives the ID card identifier, together with the mobile telephone number, or some other identifier of the relevant mobile telephone account. The service provider 21 then reconciles the ID card 11 identifier and the mobile telephone number with the account holding the value associated with the ID card 11 identifier and account associated with the mobile telephone, and transfers the amount in the ID card 11 account to the mobile telephone account to credit it.

Once activated, the ID card 11 can then be used to pay for mobile telephone usage or goods and services purchased on the internet, depending on the type of ID card 11. The payment apparatus 1 may provide internet access to allow activation of such an ID card 11 through the touch screen 4. The internet access may be metered and the account associated with the ID card 11 debited according to use of the internet facility, either on a time or other basis.

Once the ID card 11 has been activated, it is possible to credit the account held on the service provider 21 in the same way as the previous embodiments, using the payment apparatus 1.

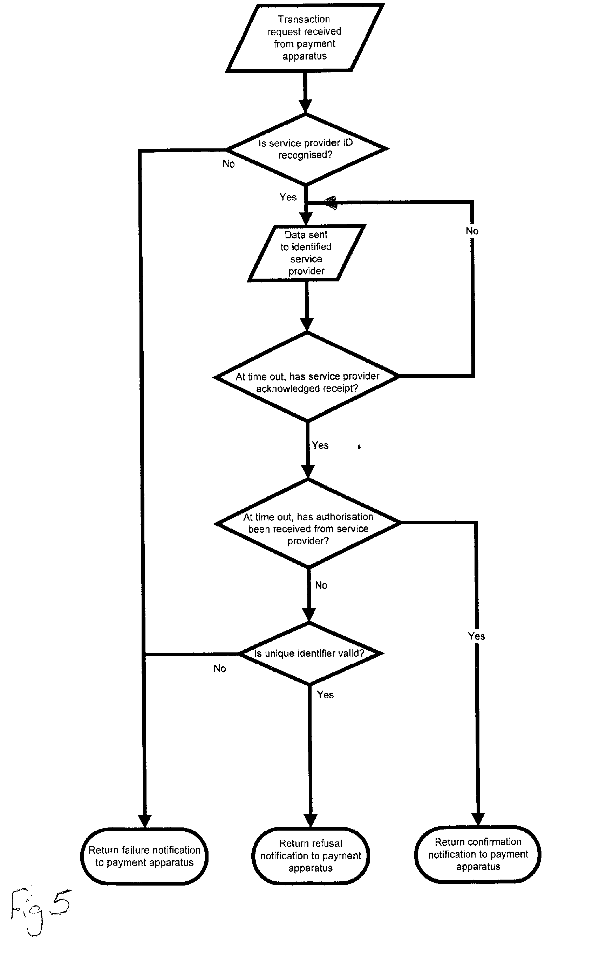

The method of operation of the system as a whole will now be described. Figure 5 shows a flow diagram of the operation of the system as a whole. The operation of the payment apparatus 1 is as described above. The operation of the processing device 20 and the service providers 21 will now be described. The processing device 20 receives an encrypted communication comprising data from the payment apparatus 1. This data contains the identification data, details of the associated service provider 21, an identifier of the payment apparatus 1 sending the signal, and the amount of the transaction. The processing device 20 processes the data, identifies the associated service provider 21 and issues a request to the service provider 21 to confirm the transaction for the amount given.

The processing device 20 sends the transaction request to the service provider 21 until a confirmation of receipt is received. Once the confirmation of receipt is received, the processing device 20 assumes a negative time out default. That is, if no positive response has been received from the service provider 21 within a specified time limit, 30 seconds for example, the processing device 20 assumes no authorisation for the transaction has been given and communicates this result back to the payment apparatus 1. The payment apparatus 1 then operates as described above.

Although the above embodiments of the apparatus and method relate explicitly to debit services and mobile telephone cards, it will apply equally to other forms of prepay crediting and payment methods and it should be appreciated that further modifications and variations will suggest themselves to those versed in the art upon making reference to the foregoing description, which is given by way of example only and which is not intended to limit the scope of the invention.

The present invention has been described above purely by way of example, and modifications can be made within the spirit of the invention. The invention also consists in any individual features described or implicit herein or shown or implicit in the drawings or any combination of any such features or any generalisation of any such features or combination, which extends to equivalents thereof.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A payment apparatus for crediting an account associated with identification data as a result of a remote transaction, the apparatus comprising:
a payment receiving device;
an identification data receiving device for receiving identification data;
an output terminal for transmitting transaction data to a remote processing device, the transaction data comprising at least data representing the identification data and the value of a payment received by the payment receiving device; and
a receiving terminal for receiving response data from the remote processing device, said response data being indicative of the result of the remote transaction.

2. A payment apparatus according to Claim 1, wherein the identification data read by the identification data receiving device includes service provider identification data.

3. A payment apparatus according to Claim 1 or 2, further comprising a printing device for printing information associated with the remote transaction based on the response data.

4. A payment apparatus according to any preceding claim, further comprising an input device for inputting instructions to the payment apparatus.

5. A payment apparatus according Claim 4, wherein the input device is a touch screen.

6. A payment apparatus according to any preceding claim, further comprising a display device for displaying information to the user.

7. A payment apparatus according to Claim 6, wherein the display device is the or a touch screen.

8. A payment apparatus according to any preceding claim, wherein the payment receiving device is a bank note scanner.

9. A payment apparatus according to any preceding claim, further comprising a verification device for verifying the validity of a payment confirmed by the payment receiving device.

10. A payment apparatus according to Claim 9, wherein the verification device comprises a bank note authenticator.

11. A payment apparatus according to Claim 9, wherein the payment receiving device comprises a bank card reader.

12. A payment apparatus according to Claim 11, wherein the verification device receives data representing bank card information from the payment receiving device, and the payment apparatus transmits data representing the card number and expiry date to a remote device and receives data from the remote device, the data from the remote device being representative of authorisation or refusal of payment.

13. A payment apparatus according to Claim 12, wherein the payment apparatus is arranged to receive a PIN at an or the input device and transmit it to the remote device.

14. A payment apparatus according to any preceding claim, wherein the identification data receiving device comprises a card reader for receiving and reading an ID card containing the identification data.

15. A payment apparatus according to Claim 14, wherein the ID card reader includes a magnetic strip reader for reading the identification data from the ID card.

16. A payment apparatus according to Claim 14 or 15, wherein the ID card reader includes an IC reader for reading the identification data from an IC on the card.

17. A payment apparatus according to Claim 4 or 5, further comprising input means to allow some or all of the identification data to be inputted manually into the payment apparatus.

18. A payment apparatus according to Claim 17, wherein the payment apparatus is arranged to receive identification data entered via the or a touch screen.

19. A payment apparatus as claimed in any preceding Claim, further comprising a vending device for vending articles bearing new identification data.

20. A payment apparatus as claimed in Claim 19, wherein the vending device vends articles in response to authenticated payment being received by the payment receiving device.

21. A payment apparatus according to any preceding Claim, wherein the transaction data also includes the data representing a payment apparatus ID.

22. A payment system for crediting an account associated with identification data as a result of a remote transaction, the system comprising:
a payment apparatus as claimed in any preceding claim;
a remote processing device communicably connected to the payment apparatus;
at least one service provider device connected to the remote processing device; wherein the output terminal transmits the transaction data to the remote processing device, and the remote processing device transmits the data to a service provider device determined based upon the identification data.

23. A payment apparatus according to Claim 22, wherein the service provider device stores credit data corresponding to one or more accounts and said service provider device modifies the credit data corresponding to the account identified by the identification data in said received transaction data.

24. A payment apparatus according to Claim 22 or 23, wherein the remote processing device sends said response data including a confirmation signal to the payment apparatus after receiving an indication from the service provider device of authorisation of the transaction.

25. A payment method for crediting an account associated with identification data as a result of a remote transaction, the method comprising:
receiving identification data at a payment apparatus;
obtaining confirmation of receipt of payment at a payment receiving device associated with the payment apparatus;
sending a transaction request from the payment apparatus to a remote processing device, the information comprising the identification data, the value of the payment received to the associated service provider; and
receiving data from the remote processing device to the payment apparatus, said data being indicative of the result of the transaction.

26. A payment method according to Claim 25, further comprising authenticating payment with a payment verification device.

27. A payment method according to Claim 25 or 26, wherein at least part of the payment is made as a result of the payment receiving device receiving bank notes.

28. A payment method according to Claim 25, 26 or 27 wherein at least part of the payment is made as a result of the payment receiving device receiving a bank card.

29. A payment method according to any of Claims 25 to 28, wherein at least part of the payment is made as a result of the payment receiving device receiving an IC chip card.

30. A payment method according to any of Claims 25 to 29, wherein the user is prompted to choose a method of payment.

31. A payment method according to any of Claims 25 to 30, wherein the user is prompted to choose the amount of payment.

32. A payment method according to any of Claims 25 to 31, further comprising the step of providing a confirmation of the transaction to the user.

33. A payment method according to any of Claims 25 to 32, wherein the confirmation is in the form of a print out.

34. A payment apparatus according to any of Claims 25 to 33, further comprising receiving a PIN as at least part of the identification data received by the payment apparatus.

35. A payment method according to any of Claims 25 to 34, wherein at least part of the identification data is associated with a particular mobile telephone number.

36. A payment method for crediting an account associated with identification data as a result of a remote transaction, the method comprising receiving a payment and receiving identification data at a payment apparatus;
transmitting transaction data to a remote processing device, the transaction data comprising at least data representing the value of the payment and the identification data;
transmitting data from the remote processing device to a service provider associated with the identification data; and
the payment apparatus receiving response data from the remote processing device, the response data being indicative of the approval of the transaction after indication, from the service provider to the remote processing device, of authorisation of the request.

37. A payment method according to any of Claims 25 to 36, further comprising the step of returning the payment if the transaction is not successful.

38. A payment method according to any of Claims 25 to 37, further comprising the step of determining the associated service provider at the payment apparatus.
